# EUROPÄISCHE PATENTANMELDUNG

(11) **EP 1 231 157 A1**
(43) Veröffentlichungstag der Anmeldung: **14.08.2002**
(21) Anmeldenummer: 01103246.3
(22) Anmeldetag: 12.02.2001
(51) Int. Cl.: B65D 63/14, F16L 3/233

(54) **Anordnung und Verfahren zum Binden von Kabelbäumen sowie Verfahren zum Herstellen von Bändern**

(71) Anmelder: Hellermann Tyton GmbH, 25436 Tornesch (DE)
(72) Erfinder: Kurmis, Viktor, 25421 Pinneberg (DE)
(74) Vertreter: Glawe, Delfs, Moll & Partner

(57) **Zusammenfassung**

Bindeanordnung bestehend aus einem mindestens einseitig gezahnten Band und einem zur Aufnahme zweier Enden (9, 10) eines Abschnitts des Bands bestimmten Schloß (3), das mindestens eine Sperreinrichtung (7, 8) enthält, die passend zur Zahnung (6) des Bands gezahnt ist. Um die Köpfe der Bandzähne (6) bei mehrfachem Schloßdurchlauf zu schonen, sind sie zumindest auf ihren beim Spannen des Bands vorauslaufenden Seiten abgerundet oder abgeschrägt. Eine solche Anordnung wird vorzugsweise bei Bindeverfahren angewendet, bei denen das freie Bandende (9) nach dem Durchlaufen einer den zu bindenden Gegenstand umgebenden Führung konstanten Durchmessers in das Schloß (3) zurückgeführt wird. Die Abrundung der Zahnköpfe gestattet es, das gezahnte Band mit hoher Genauigkeit durch Einprägen des Zahnprofils in einen heißplastischen Strang herzustellen.

## Beschreibung

Es sind Bänder zum Binden von Kabelbäumen und anderen Gegenständen bekannt, die abschnittsweise verarbeitet werden, wobei die Enden der um den zu bindenden Gegenstand geschlungenen Enden mittels eines Schlosses gesichert werden. Innerhalb des Schlosses sind zwei gezahnte Sperreinrichtungen vorgesehen, die mit einer Zahnung des Bandes sperrend zusammenwirken (EP-B-297 337). Zu Beginn des Bindevorgangs mittels eines Werkzeugs wird ein Abschnitt des Bands entgegen den Sperreinrichtungen durch ein Schloß geschoben, wobei seine Zähne von den entgegenstehenden Zähnen der Sperreinrichtungen ferngehalten werden. In einer Schlaufe, deren Länge größer ist als der Umfang des zu bindenden Gegenstands, wird das Band um den Gegenstand herumgeführt. Sein vorlaufendes Ende wird dann in das Schloß zurückgeführt und dort mittels einer der Sperreinrichtungen gesichert, während der andere im Schloß befindliche Bandstrang zum Zwecke des Spannens zurückgezogen wird. Dabei gleiten seine Zähne an denen der zweiten Sperreinrichtung entlang, wobei sie Schaden erleiden können. Wenn Gegenstände zu binden sind, deren Umfang wesentlich kleiner ist als die ursprünglich gebildete Schlaufe, kann es geschehen, daß Bandzähne mehrfach beim Spannen an den Zähnen eines Schlosses vorbeilaufen und dadurch mehrfach beansprucht werden, bis sie schließlich selbst in einem späteren Bindevorgang zur Sperrfunktion herangezogen werden. Die zuvor eingetretenen Verformungen können sich dann sperrkraftmindernd auswirken.

Die Aufgabe, diese Sperrkraftminderung zu vermeiden, wird durch die Merkmale der Ansprüche gelöst.

Gemäß Anspruch 1 sind die Zahnköpfe des Bandes zumindest auf ihren beim Spannen des Bandes vorauslaufenden Seiten abgerundet oder abgeschrägt. Dadurch wird erreicht, daß die Zahnköpfe weniger empfindlich sind als die herkömmlich spitz oder kantig begrenzten Zahnköpfe. Außerdem hat diese Formgebung den Vorteil, daß die Zähne des Bandes beim anfänglichen Durchführen durch das Schloß weniger leicht an den schloßseitigen Sperreinrichtungen hängen bleiben, sondern auch dann leicht darüber hinweggleiten, wenn sie zufälligerweise und unbeabsichtigt in geringfügigen Kontakt oder Eingriff damit treten sollten. Dies widerspricht herkömmlichen Bestrebungen, die auf eine möglichst scharfkantige Ausbildung der Zahnflanken sowohl am Band als auch an den Sperreinrichtungen des Schlosses abzielten, um sicheren Sperreingriff zu erzielen. Dieser leidet jedoch nach den der Erfindung zugrunde liegenden Erkenntnissen nicht oder nicht nennenswert, wenn die Abrundung oder Abschrägung sich auf nicht mehr als etwa ein Viertel der Gesamthöhe der Bandzähne beschränkt und sich zweckmäßigerweise über nicht mehr als 0,1 mm erstreckt. Ferner steht die Erfindung in Widerspruch zu dem bisherigen Bestreben, die gesamte Zahnhöhe des Bandes für die Kraftübertragung zu nutzen. Jedoch hat die Erfindung erkannt, daß die erfindungsgemäß hingenommene Einbuße am Tragen der Zahnhöhe im Bereich der Kopfabrundung bzw. Kopfabschrägung geringer ist als die Einbuße, die bei bekannten Bändern durch Zahnkopfbeschädigung stattfinden kann.

Wenn nur eine Reihe von Zähnen am Band vorgesehen ist, die sowohl in der einen als auch in der anderen Richtung von den Sperreinrichtungen des Schlosses erfaßt werden können, sind die Zahnköpfe zweckmäßigerweise auf beiden Seiten abgerundet bzw. abgeschrägt. Auch sind sie vorteilhafterweise im Querschnitt symmetrisch ausgebildet. Ferner kann es zweckmäßig sein, auch die Zahnköpfe der Sperreinrichtung abzurunden bzw. abzuschrägen. In diesem Fall kann man eine entsprechende Abrundung bzw. Abschrägung auch an den Zahnfüßen des Bandes vorsehen. Auch die Zahnfüße der Sperreinrichtung können abgerundet sein.

Weiterhin hat sich herausgestellt, daß die Beanspruchung der Zähne beim Durchrutschen durch das Schloß weniger leicht zu Schäden führt, wenn auch der Flankenwinkel der Zähne (d.h. der Winkel zwischen einer Flanke und einem auf die Bandrichtung gefällten Lot) verhältnismäßig groß gewählt wird, nämlich über 25°.

Die beschriebene Anordnung bewährt sich vor allem in solchen Bindeverfahren, bei denen das Band mittels einer Vorschubeinrichtung zunächst entgegen den Sperreinrichtungen durch das Schloß geführt, um den Gegenstand geschlungen und bei konstanter Umschlingungslänge in das Schloß zurückgeführt wird, weil in der Funktionsphase, in welcher das Bandende in das Schloß zurückgeführt wird, der andere Bandstrang sich noch entgegen der Sperreinrichtungen bewegen muß. Zwar werden die auf der Seite dieses Bandstrangs liegenden Sperreinrichtungen in dieser Phase zwangsweise immer noch von den Bandzähnen entfernt gehalten. Wenn aber durch die erfindungsgemäße Abrundung bzw. Abschrägung der Zahnköpfe dafür gesorgt wird, daß bei zufällig geringem Kontakt der Zähne mit den Sperreinrichtungen die Bewegung nicht gestoppt wird, braucht kein großer Sicherheitsabstand zwischen den Bandzähnen und den Sperreinrichtungen eingehalten zu werden. Da Schloß kann entsprechend knapper bemessen werden. Die steigert die Verläßlichkeit und verringert den Materialbedarf.

Ein großer Vorteil der erfindungsgemäßen Abrundung bzw. Abschrägung der Zahnköpfe und ggf. Zahnfüße des Bandes besteht darin, daß dadurch eine genaue Formung des Bandes aus dem heißplastischen Zustand heraus erleichtert wird, insbesondere, wenn das Zahnprofil einem Strang heißplastischen Kunststoffs eingeprägt wird, was zweckmäßigerweise unmittelbar im Anschluß an einen Extrusionsprozeß oder während desselben geschieht.

Die Erfindung wird im folgenden näher unter Bezugnahme auf die Zeichnung erläutert, die vorteilhafte Ausführungsbeispiele veranschaulicht. Es zeigen:
- Fig. 1: eine stark vergrößerte Querschnittsdarstellung der aus Band und Schloß bestehenden Bindeanordnung,
- Fig. 2 bis 4: die Bindeanordnung in unterschiedlichen Funktionsstadien und
- Fig. 5 und 6: Einzelheiten einer abgerundeten und einer abgeschrägten Zahnform

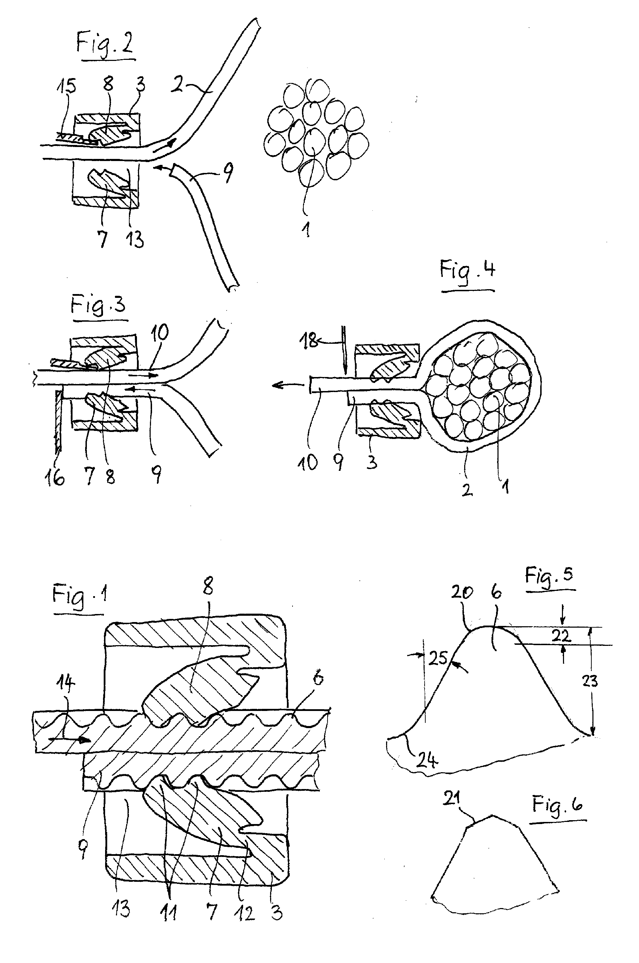

Ein Gegenstand, beispielsweise ein Kabelbündel 1, soll mittels des Bandes 2 und des Schlosses 3 so gebunden werden, wie es in Fig. 4 noch vor dem Abschneiden des Bandstrangs 10 gezeigt ist. Dafür wird ein Werkzeug von dem Typ verwendet, das in der EP-A-297 337 gezeigt ist. Das Band 2 weist auf einer Seite Zähne 6 auf, auf deren Köpfe abgerundet sind. Darauf wird weiter unten eingegangen. Das Schloß 3 enthält eine erste Sperrklinke 7, die mit dem freien Enden 9 des Bands 2 zusammenwirkt, und eine zweite Sperrklinke 8, die mit dem Strang 10 des Bands 2 zusammenwirkt, auf den die Vorschuborgane innerhalb eines Bindewerkzeugs einwirken und der mit einem Bandvorrat zusammenhängt. Die Sperreinrichtungen 7,8 weisen zu diesem Zweck Zähne 11 auf, deren Gestalt auf diejenige der Bandzähne 6 abgestimmt ist. Sie ragen derart schräg von einem Gelenkpunkt 12 in die im Schloß befindliche Öffnung 13 vor, daß sie das jeweils mit ihnen zusammenwirkende Bandende 9, 10 an einer Bewegung in Richtung des Pfeils 14 hindern. Diese Richtung wird als Sperrichtung bezeichnet.

Der Bindevorgang vollzieht sich folgendermaßen. Zunächst wird gemäß Fig. 2 der Strang 10 des Bands 2 in der Sperrichtung 14 durch das im Werkzeug gehaltene Schloß 3 hindurchgeschoben und mittels nicht dargestellter Führungseinrichtungen um den zu bindenden Gegenstand 1 geschlungen, so daß das vorlaufende Bandende 9 wieder vor dem Schloß 3 erscheint. Damit die Zahnung des durch das Schloß geführten Strangs 10 nicht von den Zähnen der zugehörigen Sperrklinke 8 festgehalten wird, wird diese mittels einer im Werkzeug vorgesehenen Zunge 15 daran gehindert, in den Bewegungsbereich des Bandes 10 vorzuragen. Die Zunge 15 bildet auch eine Führungsfläche für die gezahnte Oberfläche des Bandes 10. Sie ragt zu diesem Zweck mindestens ebenso weit in die Bandöffnung 13 des Schlosses 3 vor wie die Zähne der Sperrklinke 8. Der Strang 10 des Bands wird dadurch sicher an den Zähnen der Sperrklinke 8 vorbeigeleitet. Mit den Zähnen der Klinke 7 kann er nicht kollidieren, weil er auf deren Seite ungezahnt ist. Falls er ausnahmsweise auf dieser Seite doch gezahnt sein sollte, kann bei der Sperrklinke 7 ebenso eine diese zurückhaltende Zunge 15 vorgesehen sein, wie bei der Sperrklinke 8.

Während der Führung der Bandschlaufe 2 um den zu bindenden Gegenstand 1 ist die Länge der Bandschlaufe größer, in vielen Fällen sogar mehrfach größer, als der Umfang des zu bindenden Gegenstands 1.

Wenn am Ende des Umschlingungsvorgangs das vorlaufende Bandende 9 das Schloß 3 wieder erreicht (Fig. 2), tritt es gemäß Fig. 3 auf der Seite der Sperrklinke 7 in die Öffnung des Schlosses 3 ein, bis es auf einen Widerstand oder Sensor 16 trifft, der den weiteren Bandvorschub beendet.

Wenn die Führungseinrichtung, die das Band um den zu bindenden Gegenstand herumführt während dieses Vorgangs konstante Länge hat, wie es im allgemeinen der Fall ist, geschieht das Einschieben des Bandendes 9 in das Schloß 3 aufgrund der Vorschubbewegung, die dem Strang 10 des Bandes im Werkzeug erteilt wird. Das bedeutet, daß der Strang 10 im Schloß sich in der Sperrichtung 14 der Sperrklinke 8 und entgegen der Bewegungsrichtung des Bandendes 9 durch das Schloß 3 bewegen muß. Dies ist deshalb möglich, weil auch noch in diesem Verfahrensstadium die mit dem Strang 10 zusammenwirkende Sperrklinke 8 durch die Zunge 15 am Eingriff in die Zahnung des Strangs 10 gehindert wird.

Wenn der Vorschub des Bandes 9 in das Schloß 3 hinein auf andere Weise zustande kommt, beispielsweise durch eine Verkürzung des Umfangs der Umschlingungsführung, kann der Strang 10 währenddessen stillstehen; die Sperrklinke 8 darf dann in die Zahnung des Strangs 10 eingreifen.

Sobald das Bandende 9 in das Schloß 3 eingedrungen und durch die Sperrklinke 7 gesichert ist, wird der Strang 10 des Bandes gemäß Fig. 4 in Pfeilrichtung 17 zurückgezogen. Dadurch wird die Schlaufe 2 um den zu bindenden Gegenstand 1 gespannt. Sobald die gewünschte Bandspannung erreicht ist, wird der Strang 10 durch eine Klinge 18 abgeschnitten.

Beim Spannen des Bandes wird ein großer Teil der weiträumig um den Gegenstand 1 geschlungenen Schlaufe 2 durch das Schloß 3 zurückgezogen. Wenn der Umfang des Gegenstands 1 mehrfach kleiner ist als der Umfang der anfänglich gebildeten Schlaufe, kommt es vor, daß bestimmte Bandabschnitte bei aufeinanderfolgenden Bindevorgängen mehrfach nach vorne durch ein Schloß hindurchgeschoben und zum Spannen durch dasselbe Schloß wieder zurückgezogen werden, bevor sie selbst mit einer Sperrklinke 7, 8 verriegelnd zusammenwirken. Es ist daher wichtig, daß sie bis zum Erreichen ihres endgültigen Verriegelungszustands unbeschädigt bleiben. Dies ist mit vorbekannten, spitz oder kantig ausgebildeten Zahnköpfen schwerer zu erreichen als mit den unempfindlicheren Zähnen, die gemäß Fig. 5 abgerundet oder gemäß Fig. 6 abgeschrägt sind. Die Abrundung 20 oder Abschrägung 21 erfaßt nur den obersten Teil des Zahnkopfs, dessen Höhe 22 so gering sein soll, wie es im Hinblick auf die Funktion möglich ist. Sie ist in der Regel nicht größer als etwa ein Viertel der Zahnhöhe und/oder 0,1 mm.

An den Zähnen der Sperrklinken 7, 8 ist eine Kopfabrundung weniger erforderlich, weil sie nicht bei mehrfachen Bindevorgängen beansprucht werden. Dennoch ist eine Abrundung hier vorteilhaft, weil dadurch ihre Widerstandsfähigkeit erhöht wird und sie die daran vorbeigleitenden Zähne des Bandes weniger beanspruchen. Die Zahnfüße 24 des Bandes können entsprechend abgerundet sein, ebenso wie die Füße der Zähne 11 der Sperrklinken entsprechend der Kopfrundung der Bandzähne abgerundet sind.

Ebenfalls im Hinblick auf die Widerstandsfähigkeit der Zähne wird der Flankenwinkel 25 verhältnismäßig groß gewählt, nämlich im vorliegenden Beispiel bei 30°. Es versteht sich, daß der Eingriffswinkel der Sperrklinken 7, 8 (der Winkel zwischen der Bandrichtung und der Linie, die das Gelenk der Sperrklinke mit der Eingriffsstelle am Band verbindet) stets größer als der Flankenwinkel sein muß.

## Patentansprüche

1. Bindeanordnung bestehend aus einem mindestens einseitig gezahnten Band (2) und einem zur Aufnahme zweier Enden (9, 10) einer Schlaufe des Bands (2) bestimmten Schloß (3), das mindestens eine Sperreinrichtung (7, 8) enthält, die eine Zahnung (11) passend zur Zahnung (6) des Bands aufweist, **dadurch gekennzeichnet, daß** die Zahnköpfe (20, 21) des Bandes (2) zumindest auf ihren beim Spannen des Bands vorauslaufenden Seiten abgerundet oder abgeschrägt sind.

2. Bindeanordnung nach Anspruch 1, **dadurch gekennzeichnet, daß** die Zahnköpfe (20, 21) auf beiden Seiten abgerundet bzw. abgeschrägt sind.

3. Bindeanordnung nach Anspruch 1 oder 2, **dadurch gekennzeichnet, daß** auch die Zahnköpfe der Sperreinrichtung (7, 8) sowie die Zahnfüße (24) mindestens des Bandes (2) abgerundet sind.

4. Bindeanordnung nach einem der Ansprüche 1 bis 3, **dadurch gekennzeichnet, daß** die Zähne (6) des Bandes (2) im Querschnitt symmetrisch ausgebildet sind.

5. Bindeanordnung nach einem der Ansprüche 1 bis 4, **dadurch gekennzeichnet, daß** der Flankenwinkel der Zähne mindestens 25° beträgt.

6. Verfahren zum Binden eines Gegenstands (1) mittels einer Schlaufe eines gezahnten Bandes (2) und eines Schlosses (3), das die Enden (9, 10) der Schlaufe aufnimmt und zwei mit der Bandzahnung (6) zusammenwirkende Sperrklinken (7, 8) enthält, bei dem das Band (2) durch eine Vorschubeinrichtung in der Sperrichtung (14) der Klinken (7, 8) durch das Schloß (3) geführt, um den Gegenstand (1) geschlungen und bei konstanter Umschlingungslänge in das Schloß (3) zurückgeführt wird, **dadurch gekennzeichnet, daß** eine Bandanordnung gemäß einem der Ansprüche 1 bis 5 verwendet wird.

7. Verfahren zum Herstellen eines Bandes (2) gemäß einem der Ansprüche 1 bis 5, **dadurch gekennzeichnet, daß** einem Strang heißplastischen Kunststoffs das Zahnprofil eingeprägt wird.
